# EUROPÄISCHE PATENTSCHRIFT

(11) **EP 1 077 819 B1**
(45) Veröffentlichungstag und Bekanntmachung des Hinweises auf die Patenterteilung: **22.10.2003**
(21) Anmeldenummer: 99913098.2
(22) Anmeldetag: 02.03.1999
(51) Int. Cl.: B60G 9/02, B60G 7/00

(54) **ACHSAUFHÄNGUNG VON STARRACHSEN**
AXLE SUSPENSION OF RIGID AXLES
SUSPENSION D'ESSIEUX RIGIDES

(43) Veröffentlichungstag der Anmeldung: 28.02.2001
(73) Patentinhaber: ZF Lemförder Metallwaren AG, 49441 Lemförde (DE)
(72) Erfinder: BUHL, Reinhard, D-49163 Bohmte (DE); LUSTIG, Wilfried, D-49448 Hüde (DE); SCHMUDDE, Werner, D-49593 Bersenbrück (DE)
(86) Internationale Anmeldenummer: DE9900555
(87) Internationale Veröffentlichungsnummer: WO00051833

(56) Entgegenhaltungen:
- EP-A- 0 544 112
- WO-A-96/22896
- DE-C- 767 180
- DE-C- 19 722 961
- DE-U- 9 218 307
- FR-A- 1 174 803
- FR-A- 1 193 105
- FR-E- 63 211
- GB-A- 919 680
- GB-A- 2 274 629

## Beschreibung

Die Erfindung betrifft eine Achsaufhängung von Starrachsen für Kraftfahrzeuge, wie sie vorwiegend in mittleren und schweren Nutzkraftwagen (NKW) einsetzbar ist.
Bekannte Achskonzepte bestehen zumeist aus einem oberhalb der starren Fahrzeugachse auf dem Achskörper befestigten Dreiecklenker und mehreren, unterhalb der Fahrzeugachse angebrachten Längslenkern sowie zusätzlichen Stabilisierungseinrichtungen. Der Dreiecklenker weist zwei, einen Winkel miteinander einschließende Lenkerarme auf, die einerseits an einem Zentralgelenk befestigt und andererseits über je ein Führungsgelenk mit dem Fahrzeugaufbau verbunden sind. Als Gelenke werden bekanntermaßen zumeist Molekulargelenke eingesetzt.
Häufig ist am Achskörper, etwa achsmittig das Gehäuse für das Ausgleichsgetriebe integriert. Auf diesem Gehäuse wird dann zusätzlich die Befestigung des Zentralgelenkes des Dreiecklenkers angebracht, sodaß ein unverhältnismäßig großer Bauraum für die Achsaufhängung zur Verfügung gestellt werden muß. Dies ist im modernen Automobilbau und ganz besonders bei Niederflurfahrzeugen heute nicht mehr zu vertreten.

An der Achsaufhängung ist zum besseren Verständnis das folgende geometrische Achsenkreuz definiert: eine erste, gleichzeitig die Mittenachse des Achskörpers bildende, in Fahrzeugquerrichtung verlaufende, horizontale Achse sowie eine zweite, in Fahrzeugmitte und in Fahrzeuglängsrichtung verlaufende, horizontale Achse, die die erste horizontale Achse schneidet und orthogonal zu der ersten horizontalen Achse verläuft sowie eine den Kreuzungspunkt der horizontalen Achsen schneidende, vertikale Achse.
Bei starren Fahrzeugachsen ist das Zentralgelenk des Dreiecklenkers und / oder die Befestigung wenigstens einer der Längslenker an dem Achskörper mit einem Versatz zu wenigstens einer dieser Achsen montiert

Unter "Versatz" ist dabei jede Abweichung von der zentral-mittigen Anordnung des Zentralgelenkes zu verstehen. Der Versatz kann jedoch auch den Betrag Null annehmen, wenn das Zentralgelenk beispielsweise mittig auf dem Achskörper befestigt ist.
Derartige Achsaufhängungen sind beispielsweise in der FR-A-1 193 105 oder der GB-A-919 680 beschrieben.
Aus der EP 0 650 858 A1 ist ferner eine Einzelradaufhängung bekannt, die gekröpfte Lenker aufweist. Die in dieser Druckschrift offenbarte Lenkeranordnung ist nachteilig, weil sie infolge der höheren Beanspruchungen in den gekrümmten Bereichen das Erfordernis mit sich bringt, die Lenkerarme stabiler und damit gewichtsintensiver ausführen zu müssen.

Der Erfindung liegt die technische Problemstellung zugrunde, eine Achsaufhängung von Starrachsen zu entwickeln, die bei einer Erhöhung der Fahrstabilität einen geringeren Bauraum erfordert, als bekannte Ausführungen und gleichzeitig eine Reduzierung der Wank- und Kippneigung des Fahrzeuges ermöglicht. Ferner soll sie wartungsfreundlich, einfach herzustellen und einfach zu montieren sein. Die Verwendung von standardisierten Bauteilen ist anzustreben.

Gelöst wird diese technische Problemstellung durch die Merkmale des Patentanspruches 1.

Demgemäß ergeben sich bei der erfindungsgemäßen Lösung Montagevorteile und Bauraumeinsparungen dadurch, dass die Lenkerarme des Dreiecklenkers unterschiedliche Längen aufweisen. Zudem läßt sich der Versatz vorteilhaft realisieren.

Es sind erfindungsgemäße Ausführungen einer Achsaufhängung möglich, bei denen an der Achse ein Ausgleichsgetriebe vorhanden und das Zentralgelenk seitlich auf diesem Gehäuse des Ausgleichsgetriebes angebracht ist. Das Zentralgelenk weist dann sozusagen eine "Schrägstellung" auf.

Weitere Ausgestaltungen der Erfindung sind Gegenstand der Unteransprüche.

Jedes Molekulargelenk besteht demnach aus einem zylindrischen oder kugeligen metallischen Innenteil, dessen Befestigungszapfen beiderseits aus dem Gehäuse herausragen. Zwischen Gehäuse und Innenteil ist ein an beiden Bauteilen haftender, molekular verformbarer Elastomerkörper angeordnet.
Wenigstens eine dieser beiden Haftverbindungen ist jedoch bei Überschreitung einer maximal zulässigen Scherspannung in der Lage, durchzurutschen, sodaß eine Zerstörung des Elastomerkörpers und damit des Gelenkes durch eine Überbeanspruchung wirksam vermieden wird. Unter einer Haftverbindung ist demnach im Sinne der Erfindung eine haftende, aber lösbare Verbindung zu verstehen.

Neben den Molekulargelenken können jedoch auch Gleitlager oder Dreh-Gleitlager zum Einsatz kommen.

Um die gesamte Fahrzeugachse mit weniger Einzelteilen und einem damit verbundenen geringeren Herstellungs- und Montageaufwand produzieren zu können ist es vorteilhaft, den Befestigungsflansch, der das Zentralgelenk des Dreiecklenkers aufnimmt, einstückig an dem Achskörper anzuformen.
Das Zentralgelenk des Dreiecklenkers ist regelmäßig lösbar mit dem Befestigungsflansch verbunden.

Entsprechend einer weiteren Ausgestaltung der Erfindung wird vorgeschlagen, die Verbindung zwischen Befestigungsflansch und Zentralgelenk als Schraubverbindung auszuführen, die beispielsweise an den Befestigungszapfen des Zentralgelenkes Langlöcher zum Ausgleich von Toleranzen aufweist.
Das Zentralgelenk und die Führungsgelenke sind vorzugsweise als Molekulargelenke ausgeführt. Ihre Befestigung kann in unterschiedlichen Anordnungen erfolgen. So kann das Innenteil des Zentralgelenkes achsparallel zu der horizontalen Achse an dem Achskörper, die gleichzeitig deren Mittenachse bildet, festgelegt sein oder wenigstens eines der Gelenke ist koaxial oder achsparallel zu einer vertikalen Achse an dem Fahrzeug angeordnet. Weiterhin kann jedes Gelenk auf eine gemeinsame Ebene projiziert, einen Winkel mit dieser vertikalen Achse einschließen.

Wenigstens eines der Gelenke besteht entsprechend einer weiteren Ausgestaltung der Erfindung aus einem metallischen Gehäuse mit einem zylindrischem Innenmantel, aus einem metallischen Innenteil und einem zwischen beiden angeordneten Elastomerkörper. Dieser kompensiert axiale, radiale und kardanische Bewegungen des Gehäuses und des Innenteils relativ zueinander durch molekulare Verformung, wobei der radial nach außen mit dem zylindrischen Innenmantel des Gehäuses zusammenwirkende Elastomerkörper auf dem Innenteil haftend angeordnet und axial zwischen Blechringen vorgespannt ist und im vormontierten, axial spannungsfreien Zustand mittig umlaufend eine ballige und beidseitig daneben eine umlaufend taillierte Mantelflächengeometrie aufweist, wobei die Blechringe im Außendurchmesser ein Untermaß gegenüber dem Innendurchmesser des Innenmantels des Gehäuses aufweisen und eine unter der axialen Verspannung sich ergebende, mit der zylindrischen Innenmantelfläche des Gehäuses zusammenwirkende Gleitfläche am Umfang des Elastomerkörpers eine Drehbewegung des Innenteils im Gehäuse zuläßt, sodaß das Innenteil bei Überlast durchrutscht.
Dadurch wird in einfacher Weise eine Zerstörung und ein damit verbundener vorzeitiger Ausfall des Gelenkes und damit der Fahrzeugachse vermieden.

In Abhängigkeit von der zu erzielenden Fahrzeugachscharakteristik und mit Hinblick auf eine weiche Federungscharakteristik können in einer erfindungsgemäßen Achsaufhängung aber auch Molekulargelenke eingesetzt werden, deren Gehäuse mit einer innerhalb der Hauptbelastungszone angeordneten Ausnehmung ausgestattet ist. Als Hauptbelastungsrichtung ist bei den vorliegenden Molekulargelenken die radiale Richtung anzusehen. Die Belastungen auf Torsion und auch die möglichen kardanischen (winkligen) Auslenkungen sind eher unwesentlich und werden durch eine erfindungsgemäße Gelenkgestaltung auch kaum verändert. Derartige Molekulargelenke weisen ein Kugelstück als Innenteil auf. Durch eine Ausnehmung im Gelenkgehäuse im Äquatorbereich des Kugelstückes wird innerhalb dieser Zone eine stärkere Gummischicht zwischen Gehäuseinnenwandung und Kugeloberfläche aufgebracht. Da der Gummi dämpfende Eigenschaften hat, also "weich" ist, weist ein solches Gelenk zu Beginn seiner radial wirkenden Belastung eine weichere Federcharakteristik auf. Je stärker der Gummi jedoch zusammengepreßt wird, um so stärker preßt er sich an die Gehäusewandung an. Die Gelenkkennung wird somit mit zunehmendem radialen Federweg härter.

Der Elastomerkörper kann erfindungsgemäß ein- oder mehrschichtig sein und gegebenenfalls Einlagen aus Metall oder Kunststoff aufweisen.

Der Dreiecklenker kann erfindungsgemäß ein einteiliges Bauteil aus Kunststoff, faserverstärktem Kunststoff, Magnesium, Aluminium oder Stahl sein, in dessen dafür vorbereitete Aufnahmen die Molekulargelenke eingesetzt sind.

Um den baulichen Anforderungen besser gerecht zu werden, weisen die Lenkerarme des Dreiecklenkers unterschiedliche Längen auf. Somit ist beispielsweise eine Montage des Zentralgelenkes seitlich neben dem Ausgleichsgetriebe möglich.

Ebenso kann der Dreiecklenker bogenförmige Lenkerarme aufweisen, wodurch Dreiecklenkerausführungen möglich sind, deren von den Lenkerarmen eingeschlossener Winkel größer als 60° ist.

Der Dreiecklenker kann erfindungsgemäß ebenso aus zwei im Bereich des Zentralgelenkes miteinander verbundenen Lenkerarmen bestehen, wobei ein zweiteiliges Gehäuse eingesetzt wird, das das Zentralgelenk in Form eines Molekulargelenkes aufnimmt. Die Gehäuseteile sind durch eine Montageverbindung gekennzeichnet. Eine Verdrehbewegung der Gehäuseteile relativ zueinander ist möglich.

Einige Ausführungsbeispiele für erfindungsgemäße Achsaufhängungen von Starrachsen werden nachstehend unter Bezugnahme auf die Zeichnungen näher erläutert.
Es zeigen:
- **Figur 1 :**: eine erfindungsgemäße Achsaufhängung einer Starrachse,
- **Figuren 2,3:**: andere Achsaufhängungen von Starrachsen,
- **Figuren 4 - 6:**: erfindungsgemäße Achsaufhängungen von Starrachsen, deren Dreiecklenker jeweils Kröpfungen aufweisen,
- **Figur 7:**: eine starre Fahrzeugachse, mit unterhalb des Achskörpers befestigtem Dreiecklenker
- **Figur 8:**: eine weitere starre Fahrzeugachse, mit oberhalb des Achskörpers befestigtem Dreiecklenker,
- **Figur 9-11**:: Schnitte durch verschiedene Molekulargelenke, wie sie bei einer erfindungsgemäßen Achsaufhängung zum Einsatz kommen können,
- **Figur 12:**: eine dreidimensionale Darstellung einer Achsaufhängung.

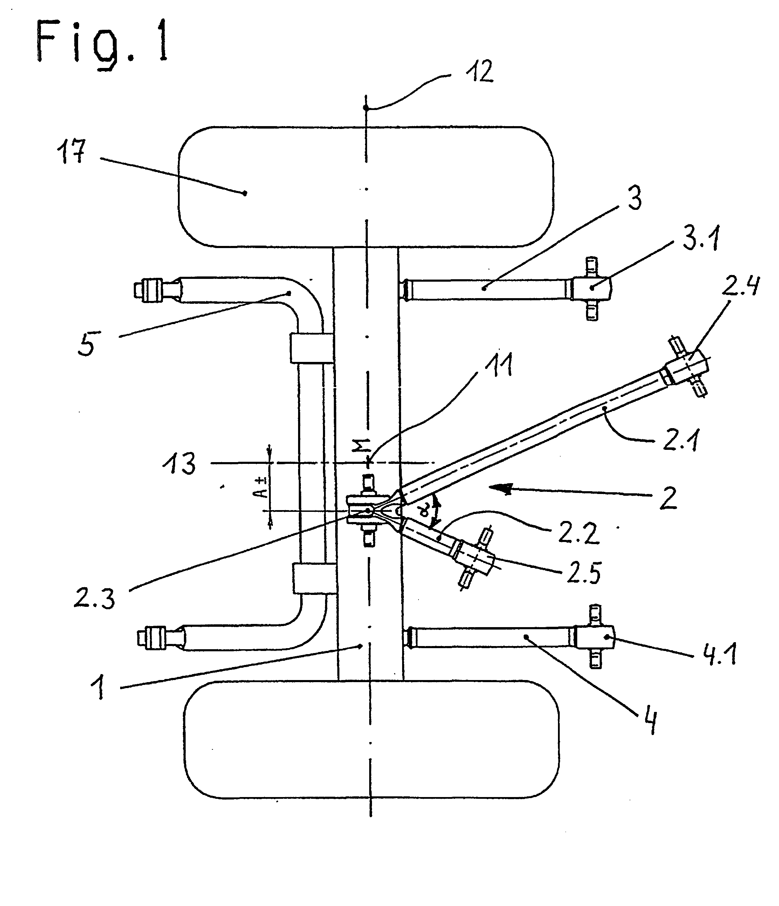

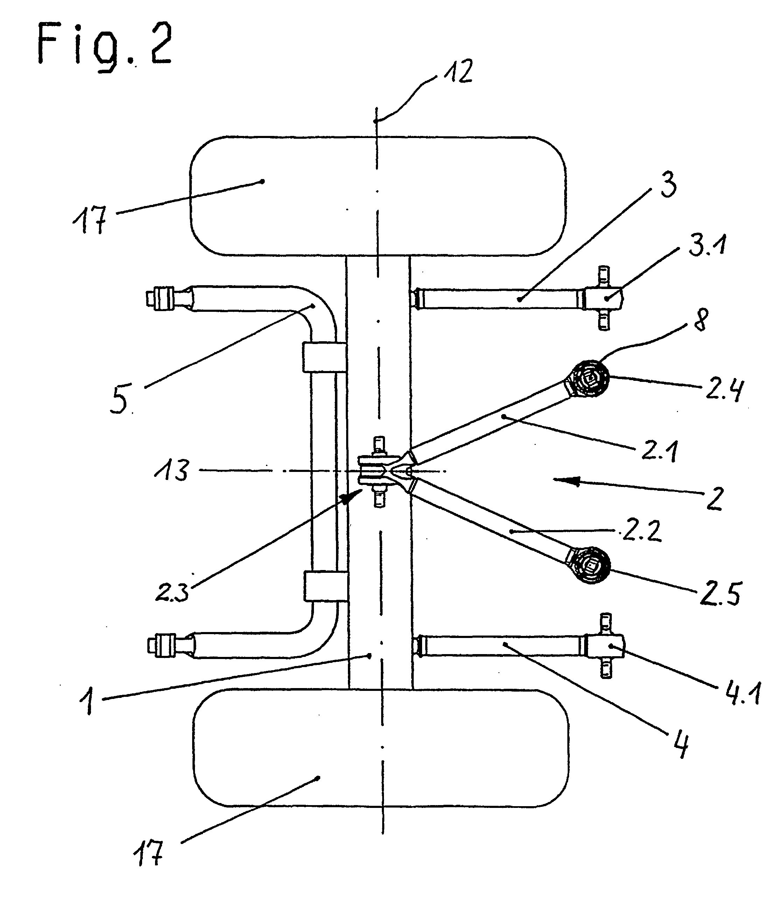

In den **Figuren 1 bis 3** sind Achsaufhängungen von Starrachsen gezeigt, die jeweils spezifische Besonderheiten aufweisen, auch wenn sie vom Grundaufbau her gleichartig sind. Aus den Figuren gehen Achsaufhängungen von Starrachsen hervor, an deren Achskörper 1 ein Dreicklenker 2 sowie zwei beabstandet zu dem Dreiecklenker und in der Höhenlage abweichend angeordnete Längslenker 3,4 und eine zusätzliche Stabilisierungseinrichtung 5 angeordnet sind. Der Dreiecklenker 2 weist zwei, einen Winkel α miteinander einschließende Lenkerarme 2.1 und 2.2 auf, die einerseits an einem Zentralgelenk 2.3 befestigt und andererseits über je ein Führungsgelenk 2.4 und 2.5 mit dem Fahrzeugaufbau verbunden sind. Die Längslenker 3,4 weisen jeweils beiderseits ein Molekulargelenk 3.1, 3.2 und 4.1, 4.2 auf. Jedes Molekulargelenk besteht aus einem metallischen Innenteil 6, dessen Befestigungszapfen 7, 8 beiderseits aus dem Gehäuse 9 herausragen. Zwischen dem Gehäuse 9 und dem Innenteil 6 befindet sich ein an beiden Bauteilen haftender, molekular verformbarer Elastomerkörper 10, wobei wenigstens eine dieser beiden Haftverbindungen bei Überschreitung einer maximal zulässigen Scherspannung durchrutscht. Das Zentralgelenk 2.3 des Dreiecklenkers 2 ist mit einem Versatz zu wenigstens einer der Achsen 11 bis 13 auf dem Achskörper montiert. In der erfindungsgemäßen Achsaufhängung der **Figur 1** ist das Zentralgelenk 2.3 achsparallel zu der ersten horizontalen Achse 12 und in Richtung dieser Achse 12 versetzt auf dem Achskörper 1 angeordnet. Der Versatz besteht vorliegend in dem Abstand des Zentralgelenkes 2.3 zu der vertikalen Achse 11 und ist in der Figur mit "A" bezeichnet. Der geometrische Mittelpunkt "M" kann links oder rechts von dem Zentralgelenk liegen, was mit "± A" kenntlich gemacht wurde. Darüber hinaus weisen die Lenkerarme 2.1, 2.2 des Dreiecklenkers unterschiedliche Längen auf.
Bei der **Figur 2** ist das Zentralgelenk achsmittig montiert, das bedeutet, der Versatz hat hier den Betrag Null. Die Besonderheit dieser Fahrzeugachse besteht in den vertikal angeordneten, endseitig an den Lenkerarmen 2.1, 2.2 vorhandenen Molekulargelenken 2.4 und 2.5.

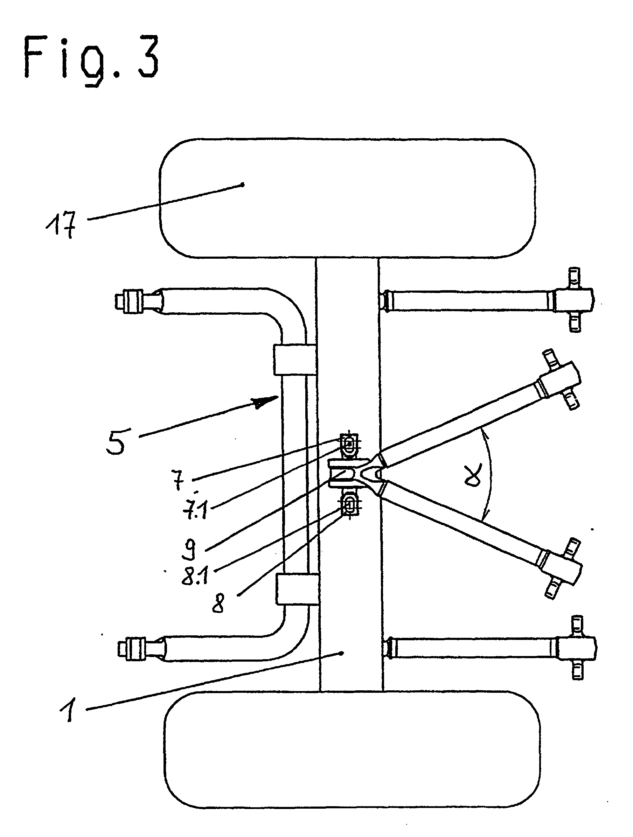

In der **Figur 3** ist eine weitere Achsaufhängung verdeutlicht. Die Befestigungszapfen 7 und 8 des Zentralgelenkes 2.3 weisen dabei Langlöcher 7.1 und 8.1 auf, die einen Toleranzausgleich sowie eine vereinfachte Montage des Dreiecklenkers auf der Achse ermöglichen. Die Montage des Zentralgelenkes ist nicht auf die in Figur 3 dargestellte Verbindung mit der Fahrzeugachse beschränkt. Vielmehr können die Befestigungszapfen des Zentralgelenkes und der Führungsgelenke nicht nur achsparallel zu der horizontalen Achse 12, sondern beispielsweise auch vertikal zu dieser oder in jeder beliebigen Winkelstellung angeordnet sein.

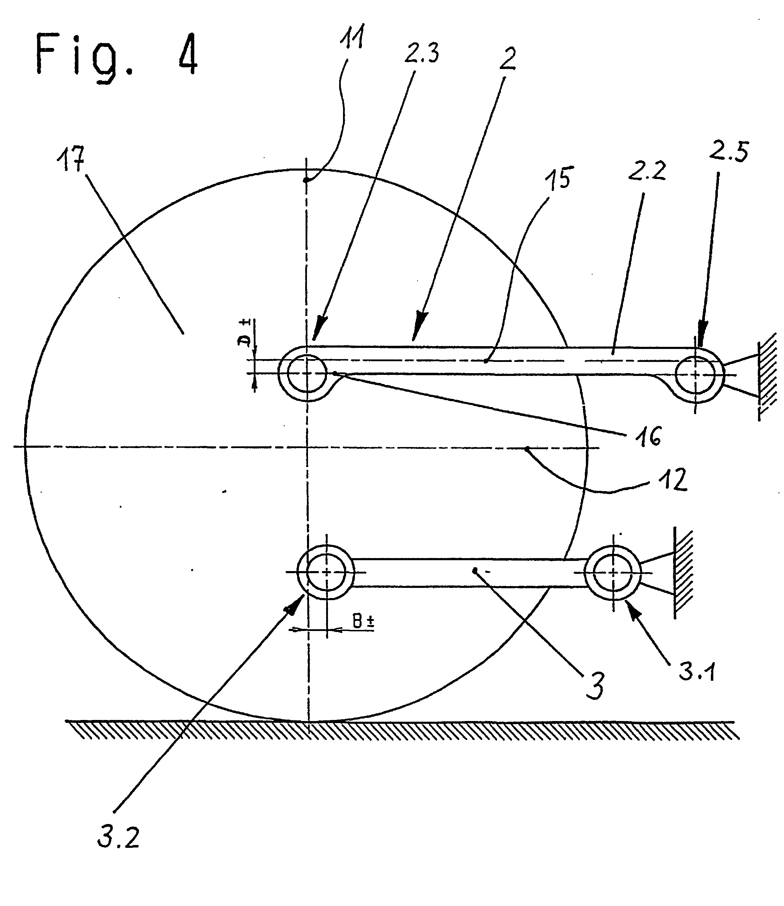

In den **Figuren 4 bis 6** sind schematisch verschiedene mögliche erfindungsgemäße Achsausführungen dargestellt. Bei der Ausführung entsprechend Figur 4 weisen die Längslenker 3, 4 einen Versatz "B" zur vertikalen Achse 11 auf. Sie sind also in Fahrtrichtung gesehen, nach vorn versetzt angeordnet. Der Dreiecklenker 2 ist beiderseits gekröpft, sodaß die Führungsgelenkmittenachse 16 einen Abstand "D" (Versatz) zur Längsmittenachse 15 des Dreiecklenkers aufweist.

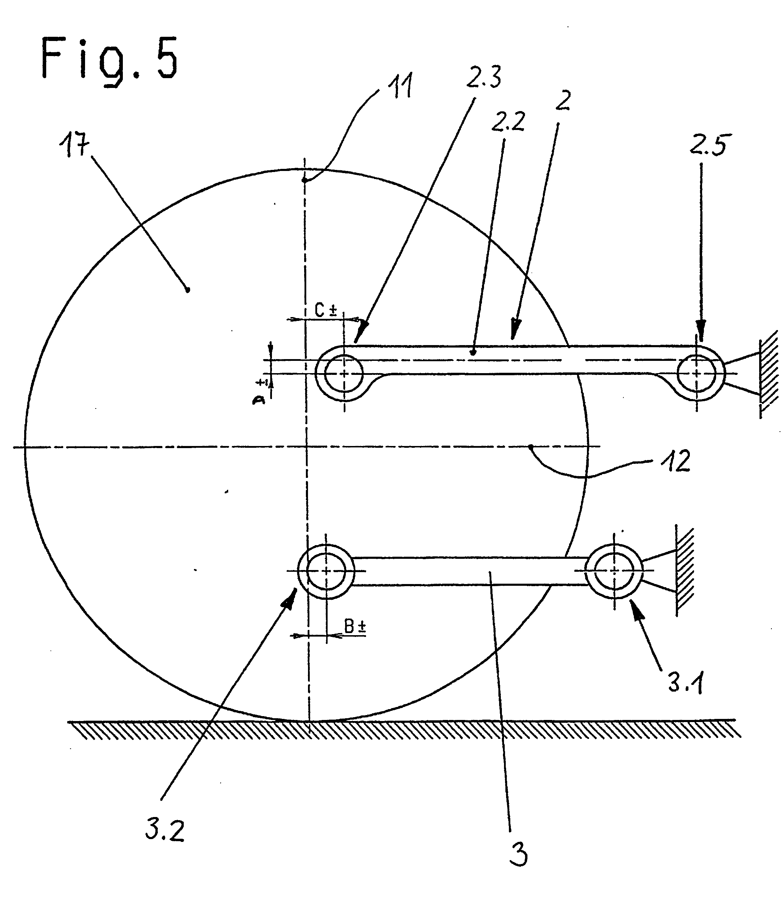

In der **Figur 5** ist zudem der Dreiecklenker 2 mit einem Versatz "C" zur vertikalen Achse 11 am Achskörper 1 montiert.

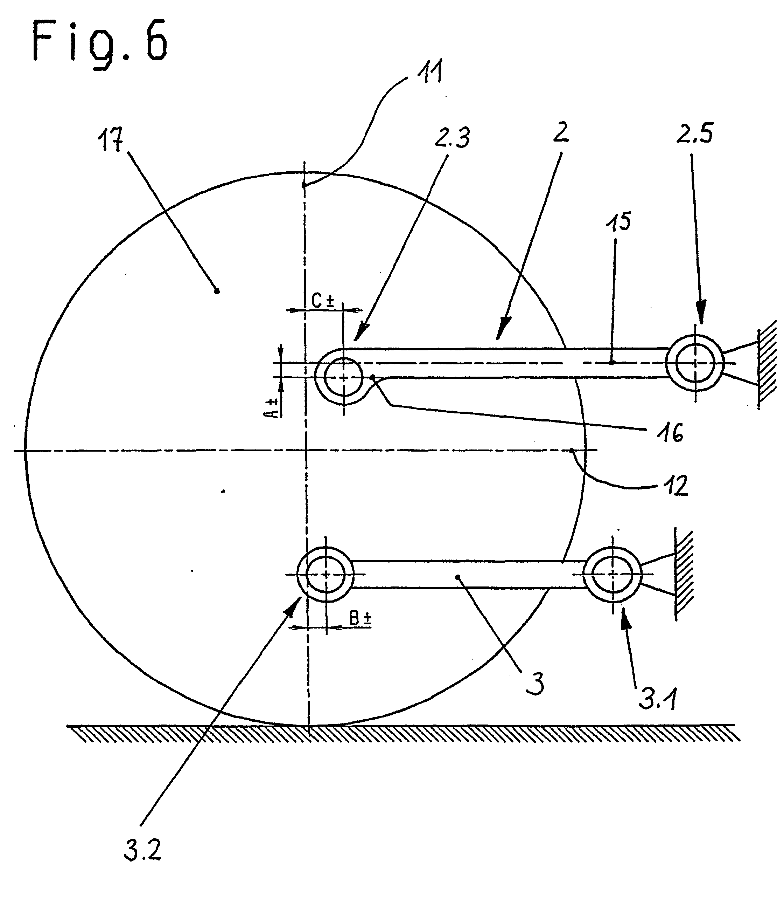

Bei der Ausführung entsprechend der **Figur 6** ist der Dreiecklenker nur einseitig gekröpft und ansonsten ist diese Achsaufhängung baugleich zu der in Figur 5 gezeigten.

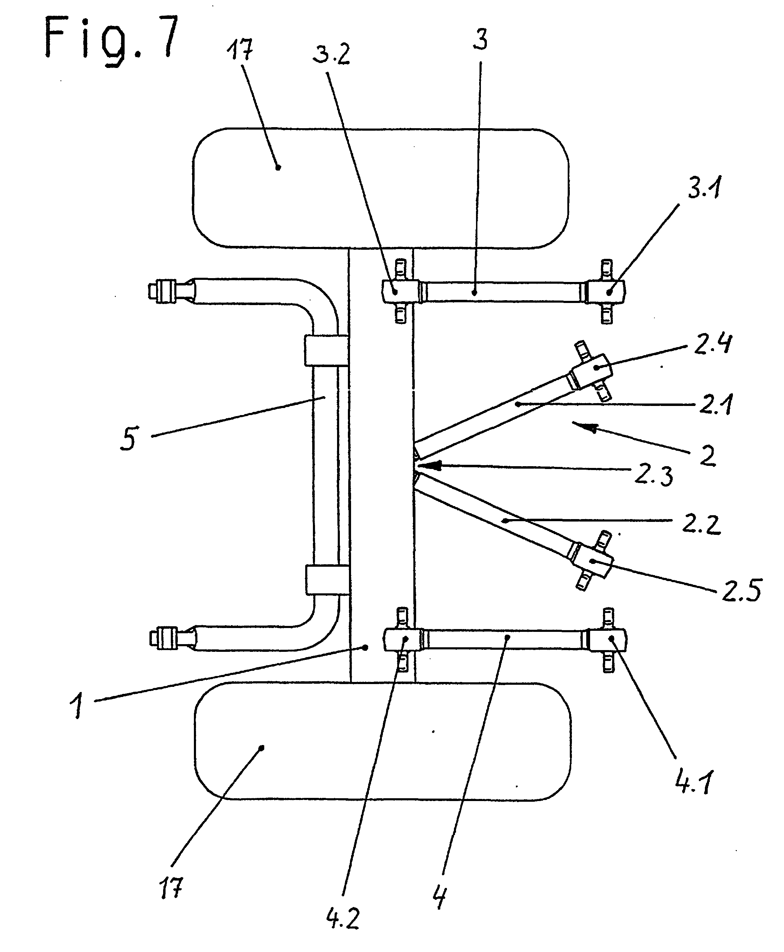

Die **Figur 7** stellt den Aufbau einer Fahrzeugachse für Niederflurfahrzeuge dar. Dabei ist der Dreiecklenker 2 unterhalb der Fahrzeugachse montiert, während die Längslenker 3, 4 oberhalb derselben festgelegt sind. Diese Bauweise erbringt erhebliche Bauraumeinsparungen. Diese Fahrzeuge können tiefer liegen, als herkömmliche.

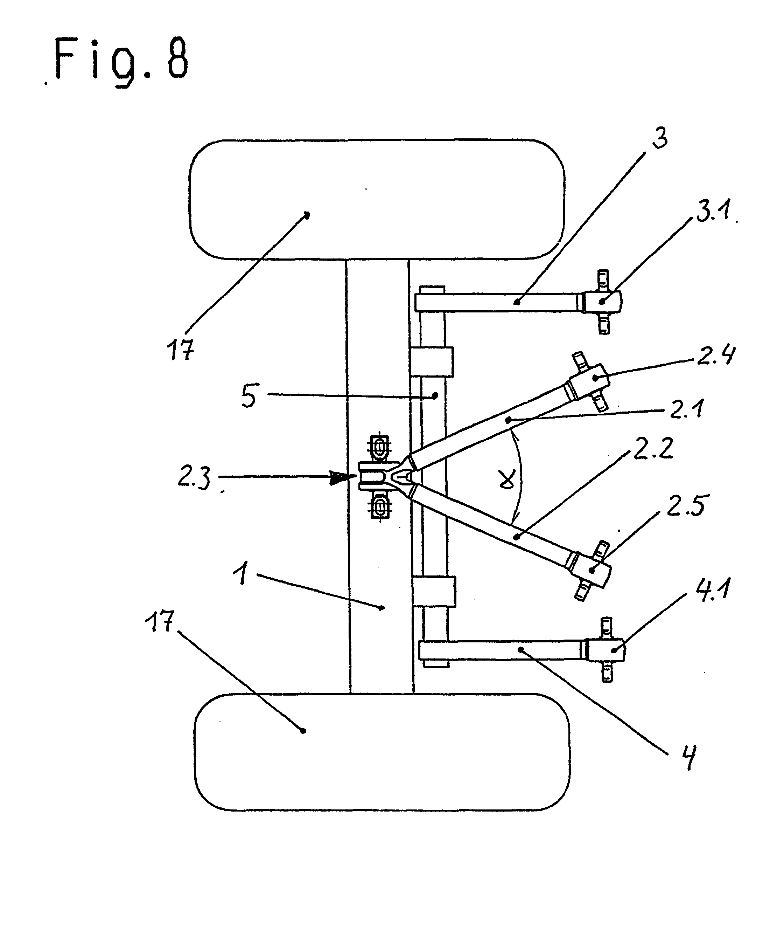

In der **Figur 8** ist die Stabilisierungseinrichtung 5 durch Montage in die Längslenker 3, 4 integriert. Selbstverständlich kann auch eine einteilige Bauweise der Längslenker und der Stabilisierungseinrichtung zum Einsatz kommen. Die Fahrzeugachse wird durch eine derartige Ausführung sehr schmal, weil sämtliche Stabilisierungsbauteile auf einer Seite angebracht werden können, während gleichzeitig ein geringerer Montageaufwand anfällt und insgesamt Bauteilé eingespart werden.

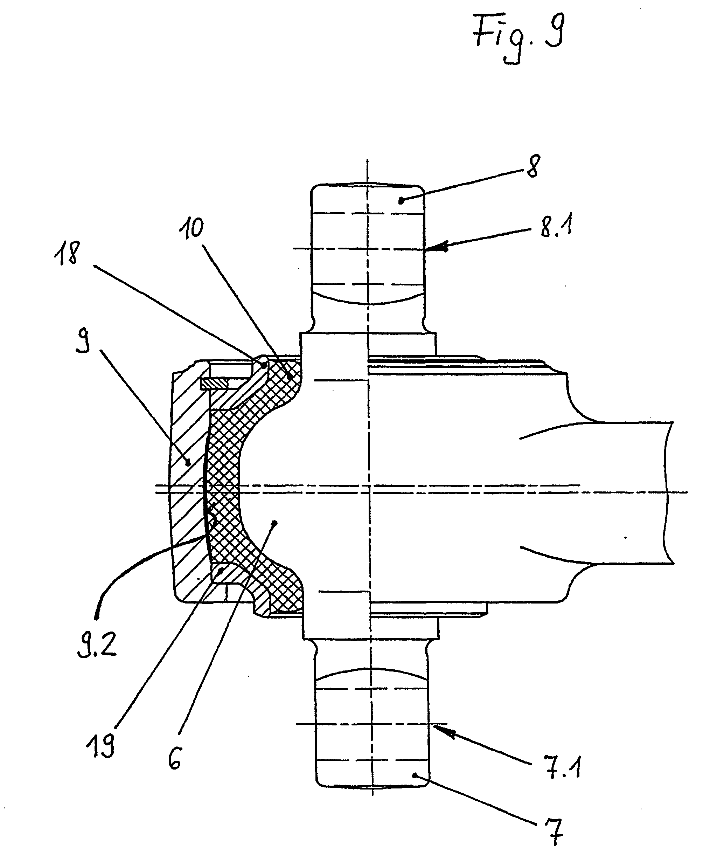

In den **Figuren 9 bis 11** sind unterschiedliche Molekulargelenke dargestellt, wie sie in jedem der beschriebenen Gelenke einer erfindungsgemäßen Achse eingesetzt werden können.
Das Molekulargelenk in Figur 9 weist ein Gehäuse 9 mit einer innerhalb der Hauptbelastungszone angeordneten Ausnehmung 9.2 auf. Als Hauptbelastungsrichtung ist hier die radiale Richtung anzusehen. Das Innenteil 6 ist ein Kugelstück. Durch die Ausnehmung 9.2 im Gelenkgehäuse 9, unmittelbar im Äquatorbereich wird innerhalb dieser Zone eine stärkere Gummischicht zwischen Gehäuseinnenwandung 9.2 und Kugeloberfläche 6 aufgebracht. Da der Gummi dämpfende Eigenschaften hat, also "weich" ist, weist ein solches Gelenk zu Beginn seiner radial wirkenden Belastung eine weichere Federcharakteristik auf. Je stärker der Gummi jedoch zusammengepreßt wird, um so stärker preßt er sich an die Gehäusewandung an. Die Gelenkkennung wird somit mit zunehmendem radialen Federweg härter.

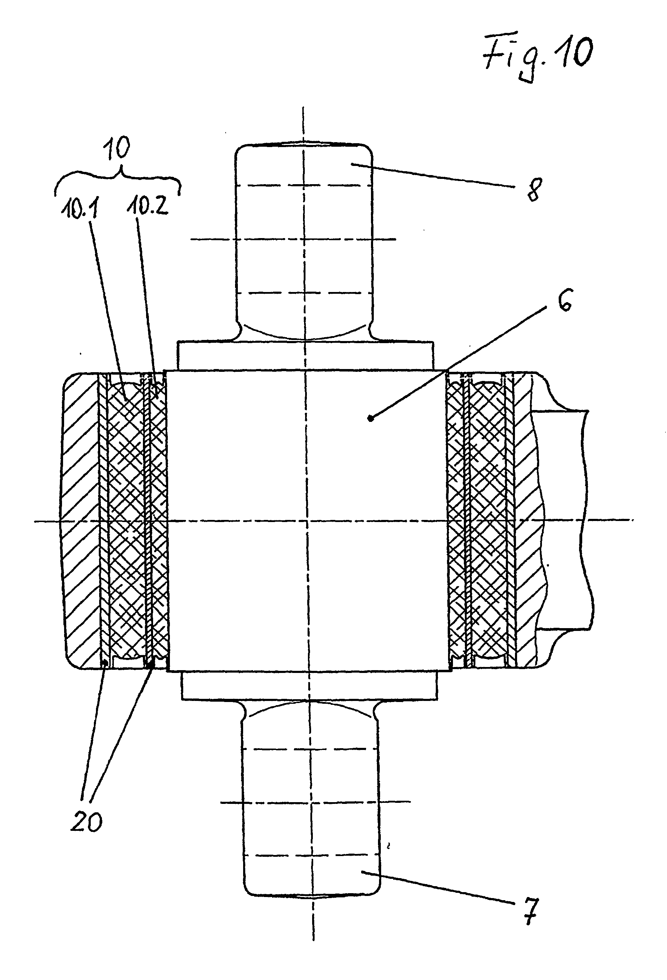

Das Molekulargelenk in Figur 10 ist ein aus mehreren Elastomerschichten 10.1 und 10.2 bestehendes Gelenk. Zwischen den Elastomerschichten sind Einlagen 20 aus Metall oder Kunststoff eingebracht die die Lagercharakteristik beeinflussen. Diese Einlagen 20 können ihrerseits Ausnehmungen aufweisen. Das Innenteil 6 ist bei diesem Gelenk zylindrisch ausgeführt.

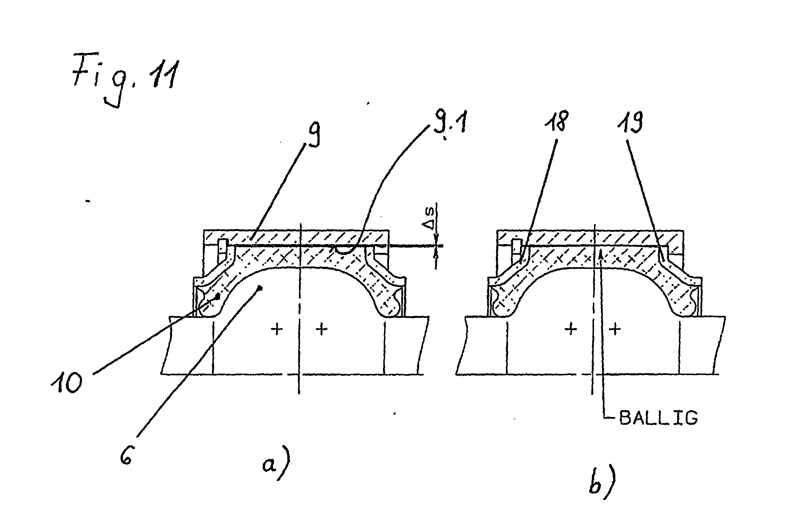

Das in **Figur 11** gezeigte Führungsgelenk besteht aus einem metallischen Gehäuse 9 mit einem zylindrischen Innenmantel 9.1, einem metallischen, kugeligen Innenteil 6 und einem zwischen beiden angeordneten Elastomerkörper 10, welcher axiale, radiale und kardanische Bewegungen des Gehäuses und des Innenteils relativ zueinander durch molekulare Verformung kompensiert.
Der radial nach außen mit dem zylindrischen Innenmantel 9.1 des Gehäuses 9 zusammenwirkende Elastomerkörper 10 ist auf dem Innenteil haftend angeordnet und ist ferner axial zwischen Blechringen 18, 19 vorgespannt. Er weist im vormontierten, axial spannungsfreien Zustand mittig umlaufend eine ballige und beidseitig daneben eine umlaufend taillierte Mantelflächengeometrie auf, wobei die Blechringe im Außendurchmesser ein Untermaß gegenüber dem Innendurchmesser des Innenmantels 9.1 des Gehäuses aufweisen. Eine unter der axialen Verspannung sich ergebende, mit der zylindrischen Innenmantelfläche des Gehäuses zusammenwirkende Gleitfläche am Umfang des Elastomerkörpers ermöglicht eine Drehbewegung des Innenteils im Gehäuse, sodaß das Innenteil bei Überlast durchrutscht.

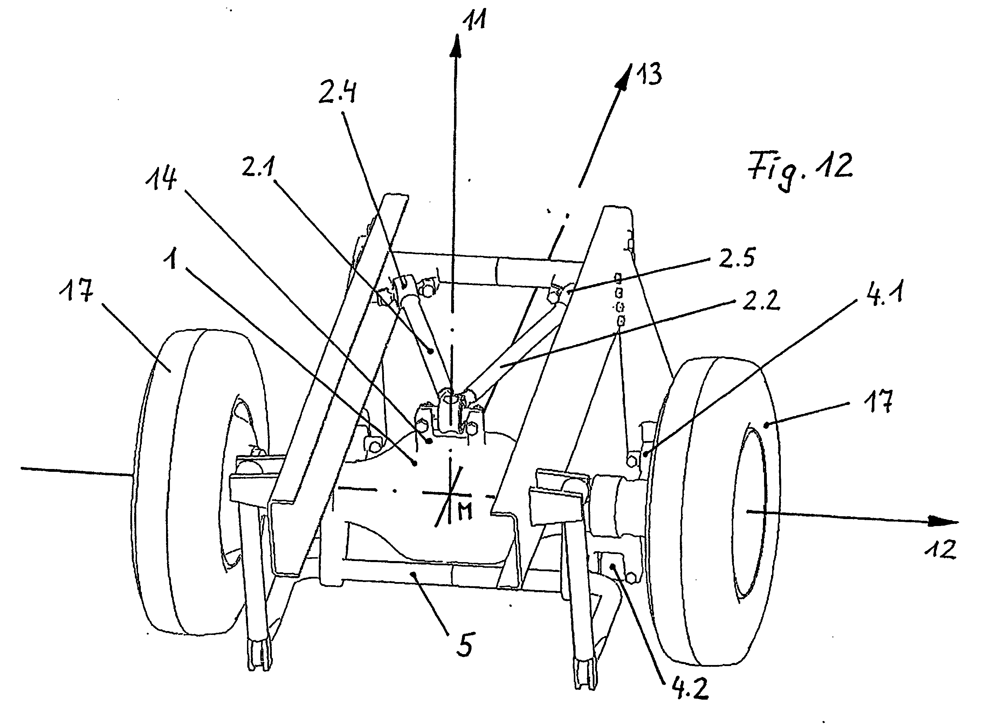

Die **Figur 12** zeigt eine dreidimensionale Darstellung einer Achsaufhängung von Starrachsen. In der Figur ist das Achsenkreuz der Achsen 11, 12 und 13 eingezeichnet. Der Dreiecklenker 2 ist etwa achsmittig an dem Befestigungsflansch 14 montiert. Der Versatz des Dreiecklenkers ist hier nur bezogen auf die horizontalen Achsen 12 und 13 vorhanden, bezüglich der Achse 11 hat er den Betrag Null. Der Kreuzungspunkt der Achsen 11, 12 und 13 ist in der Figur 12 mit "M" bezeichnet.

### Bezugszeichenliste

- 1: Achskörper
- 2: Dreiecklenker
- 2.1: Lenkerarm
- 2.2: Lenkerarm
- 2.3: Zentralgelenk
- 2.4: Molekulargelenk (Führungsgelenk)
- 2.5: Molekulargelenk (Führungsgelenk)
- 3: Längslenker
- 3.1: Molekulargelenk (Führungsgelenk)
- 3.2: Molekulargelenk (Führungsgelenk)
- 4: Längslenker
- 4.1: Molekulargelenk (Führungsgelenk)
- 4.2: Molekulargelenk (Führungsgelenk)
- 5: Stabilisierungseinrichtung
- 6: Innenteil
- 7: Befestigungszapfen
- 7.1: Langloch
- 8: Befestigungszapfen
- 8.1: Langloch
- 9: Gehäuse
- 9.1: zylindrisches Innenteil
- 9.2: Ausnehmung
- 10: Elastomerkörper
- 10.1: Elastomerschicht
- 10.2: Elastomerschicht
- 11: vertikale Achse
- 12: erste horizontale Achse
- 13: zweite horizontale Achse
- 14: Befestigungsflansch
- 15: Länsmittenachse
- 16: Führungsgelenkmittenachse
- 17: Rad
- 18: Blechring
- 19: Blechring
- 20: Einlage
- A,B,C,D: Versatz
- α: Winkel zwischen den Lenkerarmen
- M: Kreuzungspunkt der Achsen

## Patentansprüche

1. Achsaufhängung von Starrachsen, an deren Achskörper (1) ein Dreiecklenker (2) sowie zwei beabstandet zu dem Dreiecklenker und in der Höhenlage abweichend angeordnete Längslenker (3, 4) und zusätzlich eine Stabilisierungseinrichtung (5) angeordnet sind, wobei der Dreiecklenker zwei, einen Winkel miteinander einschließende Lenkerarme (2.1, 2.2) aufweist, die einerseits an einem Zentralgelenk (2.3) befestigt und andererseits über je ein Führungsgelenk (2.4, 2.5) mit dem Fahrzeugaufbau verbunden sind, wobei an der Achsaufhängung das folgende geometrische Achsenkreuz definiert ist:
eine erste, gleichzeitig die Mittenachse des Achskörpers (1) bildende, in Fahrzeugquerrichtung verlaufende, horizontale Achse (12) sowie eine zweite, in Fahrzeugmitte und in Fahrzeuglängsrichtung verlaufende, horizontale Achse (13), die die Achse (12) rechtwinklig schneidet und eine den Kreuzungspunkt (M) der horizontalen Achsen (12, 13) schneidende, vertikale Achse (11), wobei das Zentralgelenk (2.3) des Dreiecklenkers (2) und / oder die Befestigung wenigstens einer der Längslenker (3,4) mit einem Versatz zu wenigstens einer der drei Achsen (11, 12, 13) auf dem Achskörper montiert ist,
**dadurch gekennzeichnet, dass**
die Lenkerarme (2.1 , 2.2) des Dreiecklenkers (2) unterschiedliche Längen aufweisen.

2. Achsaufhängung von Starrachsen nach Anspruch 1,
**dadurch gekennzeichnet, dass**
jedes der Gelenke des Dreiecklenkers (2) und der Längslenker (3, 4) ein Molekulargelenk ist, das aus einem metallischen Innenteil (6) besteht, dessen Befestigungszapfen (7, 8) beiderseits aus dem Gehäuse (9) herausragen und zwischen Gehäuse und Innenteil ein an beiden Bauteilen haftender, molekular verformbarer Elastomerkörper (10) angeordnet ist, wobei wenigstens eine dieser beiden Haftverbindungen bei Überschreitung einer maximal zulässigen Scherspannung durchrutscht.

3. Achsaufhängung von Starrachsen nach Anspruch 1,
**dadurch gekennzeichnet, dass**
wenigstens eines der Gelenke des Dreiecklenkers (2) und der Längslenker (3, 4) ein Gleitlager oder ein Dreh-Gleitlager ist.

4. Achsaufhängung von Starrachsen nach einem der vorstehenden Ansprüche,
**dadurch gekennzeichnet, dass**
an dem Achskörper (1) ein Befestigungsflansch (14) angeformt ist.

5. Achsaufhängung von Starrachsen nach Anspruch 4,
**dadurch gekennzeichnet, dass**
das Zentralgelenk (2.3) des Dreiecklenkers (2) lösbar mit dem Befestigungsflansch (14) verbunden ist.

6. Achsaufhängung von Starrachsen nach Anspruch 5,
**dadurch gekennzeichnet, dass**
die Verbindung zwischen Befestigungsflansch (14) und Zentralgelenk (2.3) eine Schraubverbindung ist

7. Achsaufhängung von Starrachsen nach Anspruch 6,
**dadurch gekennzeichnet, dass**
die Befestigungszapfen (7, 8) des Zentralgelenkes (2.3) Langlöcher (7.1, 8.1) zum Ausgleich von Toleranzen aufweisen.

8. Achsaufhängung von Starrachsen nach einem der vorstehenden Ansprüche,
**dadurch gekennzeichnet, dass**
das Innenteil (6) des Zentralgelenkes (2.3) achsparallel zu der ersten horizontalen Achse (12) an dem Achskörper (1) festgelegt ist.

9. Achsaufhängung von Starrachsen nach einem der vorstehenden Ansprüche,
**dadurch gekennzeichnet, dass**
wenigstens eines der Molekulargelenke koaxial oder achsparallel zu der vertikalen Achse (11) an dem Fahrzeug angeordnet ist oder, auf eine gemeinsame Ebene projiziert, einen Winkel mit dieser vertikalen Achse (11) einschließt.

10. Achsaufhängung von Starrachsen nach einem der vorstehenden Ansprüche,
**dadurch gekennzeichnet, dass**
wenigstens eines der Molekulargelenke aus einem metallischen Gehäuse (9) mit einem zylindrischen Innenmantel (9.1) besteht, ein metallisches Innenteil (6) und einen zwischen beiden angeordneten Elastomerkörper (10) aufweist, welcher axiale, radiale und kardanische Bewegungen des Gehäuses und des Innenteils relativ zueinander durch molekulare Verformung kompensiert, wobei der radial nach außen mit dem zylindrischen Innenmantel des Gehäuses zusammenwirkende Elastomerkörper auf dem Innenteil haftend angeordnet und axial zwischen Blechringen (18, 19) vorgespannt ist und im vormontierten, axial spannungsfreien Zustand mittig umlaufend eine ballige und beidseitig daneben eine umlaufend taillierte Mantelflächengeometrie aufweist, wobei die Blechringe (18, 19) im Außendurchmesser ein Untermaß gegenüber dem Innendurchmesser des Innenmantels des Gehäuses aufweisen und eine unter der axialen Verspannung sich ergebende, mit der zylindrischen Innenmantelfläche des Gehäuses zusammenwirkende Gleitfläche am Umfang des Elastomerkörpers eine Drehbewegung des Innenteils im Gehäuse zuläßt, sodass das Innenteil bei Überlast durchrutscht.

11. Achsaufhängung von Starrachsen nach einem der Ansprüche 2 bis 9,
**dadurch gekennzeichnet, dass**
das Gehäuse (9) wenigstens eines der Molekulargelenke mit einer innerhalb der Hauptbelastungszone angeordneten, inneren Ausnehmung (9.2) versehen ist und ein Kugelstück (6) als Innenteil aufweist, sodass unmittelbar im Äquatorbereich des Kugelstückes (6) eine stärkere Elastomerschicht (10) zwischen Gehäuseinnenwandung (9.2) und Kugeloberfläche (6) vorhanden ist.

12. Achsaufhängung von Starrachsen nach einem der Ansprüche 2 bis 11,
**dadurch gekennzeichnet, dass**
wenigstens eines der Molekulargelenke einen zwischen Gehäuse (9) und Innenteil (6) angeordneten, mehrsohichtigen Elastomerkörper (10) aufweist.

13. Achsaufhängung von Starrachsen nach einem der vorstehenden Ansprüche,
**dadurch gekennzeichnet, dass**
wenigstens eines der Molekulargelenke ein zylindrisches Innenteil (6) aufweist.

14. Achsaufhängung von Starrachsen nach einem der vorstehenden Ansprüche,
**dadurch gekennzeichnet, dass**
der Dreiecklenker (2) ein einteiliges Bauteil aus Kunststoff, Kunststoffverbundwerkstoff, Magnesium, Aluminium oder Stahl ist, in dessen dafür vorbereitete Aufnahmen die Molekulargelenke eingesetzt sind.

15. Achsaufhängung von Starrachsen nach einem der vorstehenden Ansprüche,
**dadurch gekennzeichnet, dass**
wenigstens einer der Längslenker (3, 4) oder der Lenkerarme (2.1, 2.2) in der Nähe der Molekulargelenke gekröpft ist, sodass die Längsmittenachse (15) des Lenkers oder der Lenker und die Molekulargelenkmittenachse (16) einen räumlichen Versatz zueinander aufweisen.

16. Achsaufhängung von Starrachsen nach einem der vorstehenden Ansprüche,
**dadurch gekennzeichnet, dass**
der Winkel (α) zwischen den Lenkerarmen (2.1, 2.2) des Dreiecklenkers (2) größer als 60° ist.

17. Achsaufhängung von Starrachsen nach einem der vorstehenden Ansprüche,
**dadurch gekennzeichnet, dass**
der Dreiecklenker (2) unterhalb des Achskörpers (1) befestigt ist.

18. Achsaufhängung von Starrachsen nach einem der vorstehenden Ansprüche,
**dadurch gekennzeichnet, dass**
der Dreiecklenker (2) aus zwei im Bereich des Zentralgelenkes miteinander verbundenen Lenkerarmen besteht, wobei das zweiteilige Gehäuse (9) des Zentralgelenkes (2.3) das Molekulargelenk aufnimmt.

## Claims

1. Axle suspension of rigid axles, on the axle body (1) of which a wishbone (2) as well as two longitudinal control arms (3, 4) disposed at a distance and in a different vertical position from the wishbone, and in addition a stabilizing device (5) are disposed, wherein the wishbone comprises two control arms (2.1, 2.2), which with one another include an angle and which at one end are fastened to a central joint (2.3) and at the other end are connected in each case by a guide joint (2.4, 2.5) to the vehicle body, wherein at the axle suspension the following geometric system of coordinates is defined:
a first horizontal axis (12), which extends in vehicle transverse direction and simultaneously forms the centre line of the axle body (1), as well as a second horizontal axis (13), which extends in the centre of the vehicle and in vehicle longitudinal direction and which cuts the first horizontal axis (12) at right angles, and a vertical axis (11) cutting the point of intersection (M) of the horizontal axes (12, 13), wherein the central joint (2.3) of the wishbone (2) and/or the fastening of at least one of the longitudinal control arms (3, 4) is mounted on the axle body with an offset relative to at least one of the three axes (11, 12, 13),
**characterized in that**
the control arms (2.1, 2.2) of the wishbone (2) are of different lengths.

2. Axle suspension of rigid axles according to claim 1,
**characterized in that**
each of the joints of the wishbone (2) and of the longitudinal control arms (3, 4) is a molecular joint, which comprises a metal inner part (6), the fastening pins (7, 8) of which project from both sides of the housing (9), and disposed between housing and inner part is a molecularly deformable elastomer body (10) adhering to both components, wherein in the event of a maximum permissible shear stress being exceeded at least one of said two adhesive connections slips through.

3. Axle suspension of rigid axles according to claim 1,
**characterized in that**
at least one of the joints of the wishbone (2) and of the longitudinal control arms (3, 4) is a slide bearing or pivot slide bearing.

4. Axle suspension of rigid axles according to one of the preceding claims,
**characterized in that**
formed on the axle body (1) is a fastening flange (14) .

5. Axle suspension of rigid axles according to claim 4,
**characterized in that**
the central joint (2.3) of the wishbone (2) is connected releasably to the fastening flange (14).

6. Axle suspension of rigid axles according to claim 5,
**characterized in that**
the connection between fastening flange (14) and central joint (2.3) is a screw connection.

7. Axle suspension of rigid axles according to claim 6,
**characterized in that**
the fastening pins (7, 8) of the central joint (2.3) have oblong holes (7.1, 8.1) for tolerance compensation.

8. Axle suspension of rigid axles according to one of the preceding claims,
**characterized in that**
the inner part (6) of the central joint (2.3) is fastened to the axle body (1) paraxially to the first horizontal axis (12).

9. Axle suspension of rigid axles according to one of the preceding claims,
**characterized in that**
at least one of the molecular joints is disposed on the vehicle coaxially with or paraxially to the vertical axis (11) or, projected onto a common plane, includes an angle with said vertical axis (11).

10. Axle suspension of rigid axles according to one of the preceding claims,
**characterized in that**
at least one of the molecular joints comprises a metal housing (9) with a cylindrical inner shell (9.1), a metal inner part (6) and an elastomer body (10), which is disposed between both and which through molecular deformation compensates axial, radial and cardanic movements of the housing and of the inner part relative to one another, wherein the elastomer body cooperating in a radially outward direction with the cylindrical inner shell of the housing is disposed adhesively on the inner part and biased axially between sheet-metal rings (18, 19) and in the preassembled, axially stress-free state has, extending around the middle, a crowned lateral surface geometry and, adjacent thereto on both sides, a circumferentially waisted lateral surface geometry, wherein the sheet-metal rings (18, 19) have an outside diameter smaller than the inside diameter of the inner shell of the housing and a sliding surface, which arises at the periphery of the elastomer body under the axial deformation and cooperates with the cylindrical inner lateral surface of the housing, allows a rotation of the inner part in the housing, with the result that in the event of overload the inner part slips through.

11. Axle suspension of rigid axles according to one of claims 2 to 9,
**characterized in that**
the housing (9) of at least one of the molecular joints is provided with an inner recess (9.2) disposed within the principal load zone and has as an inner part a spherical piece (6), so that directly in the equator region of the spherical piece (6) there is a thicker elastomer layer (10) between housing inner wall (9.2) and spherical surface (6).

12. Axle suspension of rigid axles according to one of claims 2 to 11,
**characterized in that**
at least one of the molecular joints comprises a multi-layered elastomer body (10) disposed between housing (9) and inner part (6).

13. Axle suspension of rigid axles according to one of the preceding claims,
**characterized in that**
at least one of the molecular joints comprises a cylindrical inner part (6).

14. Axle suspension of rigid axles according to one of the preceding claims,
**characterized in that**
the wishbone (2) is a one-piece component made of plastics material, plastics composite material, magnesium, aluminium or steel, into specially provided receivers of which the molecular joints are inserted.

15. Axle suspension of rigid axles according to one of the preceding claims,
**characterized in that**
at least one of the longitudinal control arms (3, 4) or of the control arms (2.1, 2.2) is cranked in the vicinity of the molecular joints, so that the longitudinal centre line (15) of the control arm or of the control arms and the molecular joint centre line (16) have a spatial offset relative to one another.

16. Axle suspension of rigid axles according to one of the preceding claims,
**characterized in that**
the angle (α) between the control arms (2.1, 2.2) of the wishbone (2) is greater than 60°.

17. Axle suspension of rigid axles according to one of the preceding claims,
**characterized in that**
the wishbone (2) is fastened below the axle body (1).

18. Axle suspension of rigid axles according to one of the preceding claims,
**characterized in that**
the wishbone (2) comprises two control arms, which are connected to one another in the region of the central joint, wherein the two-piece housing (9) of the central joint (2.3) receives the molecular joint.

## Revendications

1. Suspension d'essieux rigides, sur le corps d'essieu (1) de laquelle sont disposés un levier triangulaire (2) ainsi que des leviers longitudinaux (3, 4) écartés du levier triangulaire et distants en altitude, et additionnellement un dispositif de stabilisation (5), dans lequel le levier triangulaire comporte deux bras de levier (2.1, 2.2) définissant entre eux un angle, qui d'un côté sont fixés à un joint d'articulation central (2.3) et d'un autre côté sont reliés à la carrosserie du véhicule chacun par un joint articulé de guidage (2.4, 2.5), suspension d'essieux dans laquelle le système d'axes suivant est défini : un premier axe horizontal (12) formant en même temps l'axe médian du corps d'essieu (1), s'étendant dans la direction transversale du véhicule, ainsi qu'un deuxième axe horizontal (13) s'étendant dans le milieu du véhicule et dans la direction longitudinale du véhicule, qui coupe à angle droit l'axe (12) ainsi qu'un axe vertical (11) coupant l'intersection (M) des axes horizontaux (12, 13), dans laquelle le joint d'articulation central (2.3) du levier triangulaire (2) et/ou la fixation d'au moins l'un des leviers longitudinaux (3,4) est monté(e) sur le corps d'essieu avec un déport par rapport à au moins l'un des axes (11, 12, 13),
**caractérisée en ce que**
les bras de levier (2.1, 2.2) du levier triangulaire (2) présentent des longueurs différentes.

2. Suspension d'essieux rigides selon la revendication 1, **caractérisée en**
**ce que**
chacun des joints articulés du levier triangulaire (2) et des leviers longitudinaux (3,4) est un joint articulé moléculaire constitué d'une pièce intérieure métallique (6), dont les tourillons de fixation (7,8) font saillie des deux côtés du boîtier (9), et entre le boîtier et la pièce intérieure est agencé un corps en élastomère (10) pouvant être déformé de façon moléculaire, adhérant aux deux pièces constitutives, au moins l'une de ces deux liaisons adhésives subissant un patinage lors du dépassement d'une contrainte maximale admissible de cisaillement.

3. Suspension d'essieux rigides selon la revendication 1, caractérisée en en ce que
au moins l'un des joints articulés du levier triangulaire (2) et des leviers longitudinaux (3,4) est un palier glissant ou un palier glissant et rotatif.

4. Suspension d'essieux rigides selon l'une quelconque des revendications précédentes, **caractérisée en ce que**
un flasque de fixation (14) est formé sur le corps d'essieux (1).

5. Suspension d'essieux rigides selon la revendication 4, **caractérisée en ce que**
le joint d'articulation central (2.3) du levier triangulaire (2) est relié de manière détachable au flasque de fixation (14).

6. Suspension d'essieux rigides selon la revendication 5, **caractérisée en ce que**
la liaison entre le flasque de fixation (14) et le joint articulé central (2.3) est une liaison par vissage.

7. Suspension d'essieux rigides selon la revendication 6, **caractérisée en ce que**
les tourillons de fixation (7,8) du joint articulé central (2.3) comportent des trous oblongs (7.1, 8.1) pour l'équilibrage des tolérances.

8. Suspension d'essieux rigides selon l'une quelconque des revendications précédentes, **caractérisée en ce que**
la pièce intérieure (6) du joint articulé central (2.3) est fixée avec son axe parallèle au premier axe horizontal (12) sur le corps d'essieu (1).

9. Suspension d'essieux rigides selon l'une quelconque des revendications précédentes, **caractérisée en ce que**
au moins l'un des joints articulés moléculaires est agencé coaxialement ou parallèlement à l'axe vertical (11) sur le véhicule ou, projeté sur un plan commun, définit un angle avec cet axe vertical (11).

10. Suspension d'essieux rigides selon l'une quelconque des revendications précédentes, **caractérisée en ce que**
au moins l'un des joints articulés moléculaires est constitué d'un boîtier métallique (9) comportant une enveloppe intérieure cylindrique (9.1), comprend une partie intérieure métallique (6) et un corps en élastomère (10) disposé entre les deux, qui compense par déformation moléculaire des mouvements axiaux, radiaux et de cardan du boîtier et de la pièce intérieure l'un par rapport à l'autre, dans laquelle le corps en élastomère, coopérant radialement vers l'extérieur avec l'enveloppe cylindrique du boîtier, est disposé de manière adhérente sur la pièce intérieure et mis sous précontrainte axialement entre des bagues de tôle (18, 19), et présente, à l'état pré-monté et libre de contrainte axiale, une géométrie de surface d'enveloppe, convexe dans une partie centrale et faisant tout le tour et à côté de cette partie des deux côtés cintrée sur la périphérie, dans laquelle les bagues de tôle (18, 19) présentent dans leur diamètre extérieur une dimension inférieure au diamètre intérieur de l'enveloppe intérieure du boîtier, et sur la périphérie du corps élastomère, une surface de glissement se produisant lors du gauchissement axial, coopérant avec la surface d'enveloppe intérieure cylindrique du boîtier, qui autorise un mouvement de rotation de la pièce intérieure dans le boîtier, de sorte que lors d'une surcharge la pièce intérieure patine.

11. Suspension d'essieux rigides selon l'une des revendications 2 à 9, **caractérisée en ce que**
le boîtier (9) d'au moins l'un des joints articulés moléculaires présente un creux intérieur (9.2) agencé à l'intérieur de la zone de charge principale et comporte comme pièce intérieure une pièce sphérique (6), de sorte qu'il est prévu, directement dans la zone équatoriale de la pièce sphérique (6), une couche d'élastomère (10) plus épaisse entre la paroi intérieure (9.2) du boîtier et la surface sphérique (6).

12. Suspension d'essieux rigides selon l'une des revendications 2 à 11, **caractérisée en ce que**
au moins l'un des joints articulés moléculaires comprend un corps en élastomère multicouche (10) disposé entre le boîtier (9) et la pièce intérieure (6).

13. Suspension d'essieux rigides selon l'une des revendications précédentes,
**caractérisée en ce que**
au moins l'un des joints articulés moléculaires comporte une pièce intérieure cylindrique (6).

14. Suspension d'essieux rigides selon l'une des revendications précédentes,
**caractérisée en ce que**
le levier triangulaire (2) est une partie constructive mono-pièce en matière plastique, en matière plastique composite, en magnésium, en aluminium ou en acier, dans des logements préparés à cet effet duquel sont insérés les joints articulés moléculaires.

15. Suspension d'essieux articulés selon l'une des revendications précédentes,
**caractérisée en ce que**
au moins l'un des leviers longitudinaux (3,4) ou des bras de leviers (2.1, 2.2) est coudé au voisinage des joints articulés moléculaires, de sorte que l'axe médian longitudinal (15) du levier ou des leviers, et l'axe médian (16) du joint articulé moléculaire présentent dans l'espace un déport l'un par rapport à l'autre.

16. Suspension d'essieux rigides selon l'une des revendications précédentes,
**caractérisée en ce que**
l'angle (α) entre les bras de leviers (2.1, 2.2) du levier triangulaire (2) est supérieur à 60°.

17. Suspension d'essieux rigides selon l'une des revendications précédentes,
**caractérisée en ce que**
le levier triangulaire (2) est fixé au-dessous du corps d'essieux (1).

18. Suspension d'essieux rigides selon l'une des revendications précédentes,
**caractérisée en ce que**
le levier triangulaire (2) est constitué de deux bras de levier reliés ensemble dans la zone du joint articulé central, et le boîtier (9) en deux parties du joint d'articulation central (2.3) loge le joint articulé moléculaire.
